# EUROPEAN PATENT APPLICATION

(11) **EP 4 597 733 A1**
(43) Date of publication of application: **06.08.2025**
(21) Application number: 24826327.9
(22) Date of filing: 16.02.2024
(51) Int. Cl.: H01M 50/521, H01M 50/502, H01M 50/569, H01M 50/526, H01M 50/588, H01M 50/59

(54) **BUSBAR ASSEMBLY AND BATTERY PACK INCLUDING SAME**

(30) Priority: 21.06.2023 KR 20230079552
(71) Applicant: LG Energy Solution, Ltd., Seoul 07335 (KR)
(72) Inventor: YUN, Sunwoo, Daejeon 34122 (KR)
(74) Representative: Plasseraud IP
(86) International application number: PCT/KR2024/095285
(87) International publication number: WO 2024/263012

(57) **Abstract**

A busbar assembly according to one embodiment of the present disclosure includes: a busbar including a body and end portions that extend from both ends of the body and have through holes defined therein; an insulating layer that encloses the body and has a groove formed in a recessed shape; and a cap that is inserted into the groove and encloses the end portions, wherein the insulating layer has a stronger elasticity than the cap.

## Description

### [TECHNICAL FIELD]

### Cross-Reference with Related Applications

This application is based on and claims priority from Korean Patent Application No. 10-2023-0079552, filed on June 21, 2023, with the Korean Intellectual Property Office, the disclosure of which is incorporated herein in its entirety by reference.

The present disclosure relates to a busbar assembly and a battery pack including the same, and more particularly, to a busbar assembly having an improved insulation stability, and a battery pack including the same.

### [BACKGROUND]

The use of mobile devices such as cell phones, laptops, camcorders, and digital cameras has been routinized in modern society, which accelerates the development of technologies in the fields related to the mobile devices. Further, as a measure to solve the atmospheric pollution caused from existing gasoline vehicles that uses fossil fuels, rechargeable secondary batteries are being used as power sources for electric vehicles (EV), hybrid electric vehicles (HEV), plug-in hybrid electric vehicles (P-HEV) and so on. Thus, the necessity to develop the secondary batteries is increasing.

Presently, commercially available batteries include nickel-cadmium batteries, nickel-hydrogen batteries, nickel-zinc batteries, and lithium batteries. Of these batteries, lithium batteries are emerging as the most popular, as they do not suffer from the memory effect, and therefore, are freely rechargeable, have low self-discharge rates, and have high energy density, as compared to nickel-based batteries.

Typically, a lithium secondary battery uses a lithium-based oxide and a carbon material as a positive electrode active material and a negative electrode active material, respectively. The lithium secondary battery includes an electrode assembly fabricated by disposing a separator between a positive electrode plate and a negative electrode plate, which are coated with the positive electrode active material and the negative electrode active material, respectively, and a battery case that hermetically houses the electrode assembly together with an electrolyte.

In general, according to the exterior shapes of battery cases, lithium secondary batteries may be classified into can-shaped secondary batteries fabricated by mounting the electrode assembly in a metal can, and pouch-shaped secondary batteries fabricated by mounting the electrode assembly in a pouch made of an aluminum laminate sheet.

In case of secondary batteries used for small-size devices, two or more battery cells are arranged, and in case of secondary batteries used for medium- and large-size devices such as automobiles, a battery module is used, which includes multiple battery cells electrically connected to each other. In the battery module, the multiple battery cells are connected in series or parallel to form a battery cell stack, which improves the capacity and the power. One or more battery modules may configure a battery pack by being mounted together with various control and protection systems such as a battery disconnect unit (BDU), a battery management system (BMS), and a cooling system.

In the battery pack configured to gather a plurality of battery modules, heat generated from multiple battery cells can be added up in a narrow space, so that the temperature can rise more quickly and excessively. In other words, battery modules in which a plurality of battery cells are stacked and a battery pack equipped with these battery modules can obtain high output, but when the heat dissipation of battery cells is not properly performed or thermal runaway phenomenon occurs in a battery cell, the possibility of explosion or ignition is high.

Meanwhile, a busbar connected to a battery module is provided inside the battery pack.

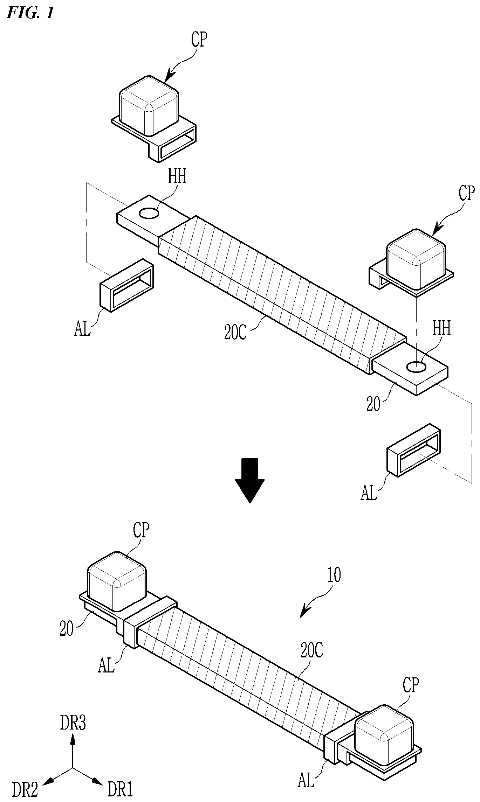

FIG. 1 shows an exploded perspective view and a combined perspective view of a conventional busbar assembly.

Referring to FIG. 1, a conventional busbar assembly 10 includes a busbar 20, a sheath 20C that encloses the busbar 20, a cap CP, and a tape AL for fixing the cap CP. The busbar 20 is a rod-shaped metal member extending along the longitudinal direction. Both ends of the busbar 20 may be formed with a through hole (HH) for connecting with a terminal busbar of a battery module. Such a busbar 20 is configured to be in charge of HV (high voltage) connection in a battery pack. The HV connection means a connection that serves as a power source for supplying electric power, and the busbar 20 is configured to guide an electrical connection of the battery modules, and generally includes a metal material having excellent electrical conductivity. As an example, the busbar 20 may include a copper(Cu) material.

The sheath 20C may enclose the busbar 20. The sheath 20C can include a material that is electrically insulating, and as an example, it may include a material such as silicone or epoxy. Since the sheath 20C encloses the busbar 20 through which a high current flows, it blocks the busbar 20 from coming into contact with other electrical components or conductive members other than the terminal busbar of the battery module and causing a short circuit.

A fastening member may be inserted into the through hole(HH) of the busbar 20 to connect the busbar 20 to the terminal busbar of the battery module. A cap(CP) is attached to both ends of the busbar 20 for insulation. The cap(CP) may be, for example, a rubber cap. The cap(CP) may be attached to the sheath(20C) using a tape(AL).

However, when a flame occurs inside the battery pack, the flame has a very high temperature of about 1000°C, the busbar 20 may be exposed while the sheath 20C sheath the busbar 20 melts, or the cap CP and tape AL melt. If the exposed busbar 20 comes into contact with another conductive member to cause a short circuit, the internal flame may further spread, and this flame may spread to the outside of the battery pack. Ultimately, this may lead to an explosion of a battery pack or a vehicle equipped with the battery pack.

Therefore, there is a need to develop techniques for a busbar assembly capable of maintaining its electrical insulation performance even when a flame occurs in the battery pack.

### [DETAILED DESCRIPTION OF THE INVENTION]

### [Technical Problem]

It is an object of the present disclosure to provide a busbar assembly capable of maintaining its electrical insulation performance without melting even when a flame occurs in a battery pack, and a battery pack including the busbar assembly.

However, the technical objects solved by the embodiments of the present disclosure are not limited to those disclosed above, and may be expanded in various ways within the scope of the technical idea included in the present disclosure.

### [Technical Solution]

According to the present disclosure, a busbar assembly comprises: a busbar including a body and end portions that extend from both ends of the body and have through holes defined therein; an insulating layer that encloses the body and has a groove formed in a recessed shape; and a cap that is inserted into the groove and encloses the end portions, wherein the insulating layer has a higher elasticity than the cap.

The insulating layer may include a first portion that encloses the body, and a second portion that extends from the first portion to enclose a portion of the end portions, the second portion being covered by the cap.

Two grooves may be formed in an upper surface of the first portion, and each of the two grooves may be formed adjacent to the second portion.

The cap may include a fastener formed such that the portion of the cap protrudes in a direction toward the body to be inserted into the groove.

The groove may be formed along a circumference of the second portion, and the groove may be adjacent to the first portion.

At least the portion of the cap may be inserted into the groove while the cap covers the second portion.

The first portion may enclose an outer peripheral surface of the busbar.

The second portion may enclose an upper surface and side surfaces of the busbar.

The cap may cover at least a portion of a lower surface of the busbar.

The busbar assembly may further comprise a fiberglass layer provided to be wrapped around the insulating layer.

The insulating layer may comprise silicone that becomes ceramics at a high temperature. The cap may comprise a fire-resistant plastic.

According to the present disclosure, a battery pack comprises: at least one busbar assembly; a plurality of battery modules; a battery disconnect unit (BDU) module that controls an electrical connection of the plurality of battery modules; and a battery management system (BMS) module that monitors and controls operations of the plurality of battery modules, wherein the at least one busbar assembly electrically connects at least one of: between the plurality of battery modules, between the battery module and the BDU module, between the battery module and the BMS module, or between the BDU module and the BMS module.

### [Advantageous Effects]

The busbar assembly of the present disclosure maintains the shape of the sheath and caps of a busbar even in a flame, so that the insulation performance and the fire resistance can be improved.

The effects of the present disclosure are not limited to the effects mentioned above, and additional other effects not mentioned herein will be clearly understood by one of ordinary skill in the art from the claims set forth herein.

### [BRIEF DESCRIPTION OF THE DRAWINGS]

FIG. 1 illustrates an exploded perspective view and a combined perspective view of a conventional busbar assembly.
FIG. 2 is a plan view of a battery pack according to an embodiment.
FIG. 3 is a perspective view of one of the battery modules included in the battery pack of FIG. 2.
FIG. 4 is a partial perspective view of the battery module of FIG. 3, from which a module frame and an end plate are removed.
FIG. 5 is a perspective view of a busbar according to an embodiment.
FIG. 6 is a plan view of a busbar with an insulating layer provided thereon according to an embodiment.
FIG. 7 is a plan view of a busbar assembly according to an embodiment.
FIG. 8 is a side view of a busbar assembly according to an embodiment.
FIG. 9 is a cross-sectional view of a busbar assembly according to an embodiment.
FIG. 10 is a cross-sectional view of a busbar assembly according to an embodiment.
FIG. 11 is a cross-sectional view of a busbar assembly according to an embodiment.
FIG. 12 is a cross-sectional view of a busbar assembly according to an embodiment.
FIG. 13 is a plan view of a busbar assembly according to an embodiment.
FIG. 14 is a plan view of a busbar assembly according to an embodiment.
FIG. 15 is a plan view of a busbar assembly according to an embodiment.
FIG. 16 is a side view of a busbar assembly according to an embodiment.
FIG. 17 is a rear view of a busbar assembly according to an embodiment.

### [DETAILED DESCRIPTION OF THE EMBODIMENTS]

Hereinafter, with reference to the accompanying drawings, various embodiments of the present disclosure will be described in detail to the extent that one of ordinary skill in the art can easily practice the present disclosure. The present disclosure may be implemented in various different forms, and is not limited to the embodiments described herein.

In order to clearly describe the present disclosure, descriptions of parts unrelated to the description of the present disclosure will be omitted, and the same or similar components throughout the description will be denoted with the same reference numerals.

Since the drawings arbitrarily illustrate the dimension and thickness of each component for the convenience of description, the present disclosure is not necessarily limited to that illustrated. The drawings depict the thickness in an enlarged scale to clearly show different layers and regions. Further, the drawings exaggerate the thickness of a certain layer or region to facilitate the description thereof.

When a layer, film, region, plate or the like is disposed "on" a specific part, the description includes not only a case where the layer, film, region, plate or the like is disposed "directly on" the specific part, but also a case where the layer, film, region, plate or the like is disposed on the specific part via another part. When a part is disposed "directly on" another part, this indicates that no new component is present between the two parts. Further, when a component is disposed "on" a reference part, this indicates that the component is present at the top of or under the reference part, and does not necessarily indicate that the component is disposed only at the top of the reference part, which is opposite to the direction of gravity.

Throughout the descriptions herein, when a certain part "includes" a component, this does not indicate that the certain part excludes other components, but indicates that the part may further include other components, unless otherwise defined.

Throughout the descriptions herein, the terms "in a plan view" indicate viewing an object from above, and the terms "in a cross-sectional view" indicate viewing a vertical cross section of an object from side.

As used herein, a first direction DR1, a second direction DR2, and a third direction DR3 have relative concepts to each other. The first direction DR1, the second direction DR2, and the third direction DR3 may intersect perpendicular to each other. Throughout the descriptions herein, the directions "up" and "down" are defined along the third direction DR3. For example, the terms "up" and "upward" indicate the third direction DR3, and the terms "down" and "downward" indicate the opposite direction to the third direction DR3. In the descriptions herein, the "thickness" indicates the length measured in the third direction DR3.

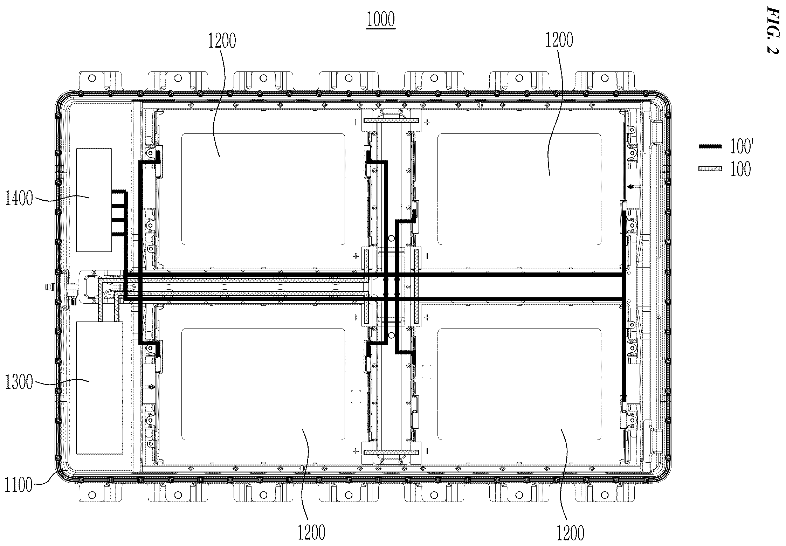

FIG. 2 is a plan view of a battery pack according to an embodiment.

Referring to FIG. 2, a battery pack 1000 according to an embodiment includes busbar assemblies 100, a pack frame 1100, battery modules 1200, a battery disconnect unit (BDU) module 1300 that controls the electrical connections of the battery modules 1200, and a battery management system (BMS) module 1400 that monitors and controls the operations of the battery modules 1200. According to the present embodiment, at least one busbar assembly 100 electrically connects at least one of: between two battery modules 1200, between a battery module 1200 and the BDU module 1300, between a battery module 1200 and the BMS module 1400, or between the BDU module 1300 and the BMS module 1400. Specifically, a plurality of battery modules 1200 may be accommodated in the pack frame 1100, and each busbar assembly 100 may make the electrical connection between battery modules 1200 or between a battery module 1200 and the BDU module 1300. That is, the busbar assemblies 100 according to the present embodiment may provide the high voltage (HV) connection. Here, the HV connection refers to a connection that serves as a power source for supplying a power requiring a high voltage, such as a connection between battery cells or between battery modules.

Meanwhile, the BDU module 1300 is a member that controls the electrical connection of the battery modules 1200, and may shut off the power supply between a power converter and the battery modules 1200. Under a condition that a current exceeds a set range, the BDU module 1300 may shut off the power supply of the battery pack 1000, to ensure the safety of the battery pack 1000.

Meanwhile, low voltage (LV) connection members 100' according to the present embodiment may make the electrical connection between the battery modules 1200 and the BMS module 1400. Here, the electrical connection refers to an LV connection that indicates a sensing connection for detecting and controlling the voltages and temperatures of the battery modules 1200. Specifically, sensors or the like are disposed in the battery modules 1200, and information of the temperatures or voltages of the battery modules 1200 is transmitted in real time to the BMS module 1400 via the LV connection members 100'. From the BMS module 1400, the operation states of the battery modules 1200 may be monitored and controlled in real time. Although not illustrated, an HV current sensor may be integrated in the BMS module 1400. In this case, the busbar assemblies according to the present embodiment may make the electrical connection between the battery modules 1200 and the BMS module 1400 or between the BDU module 1300 and the BMS module 1400.

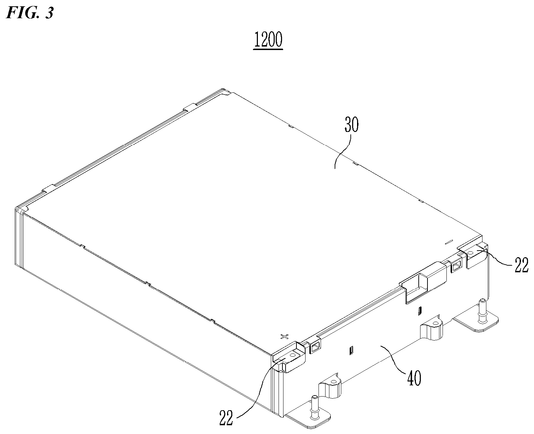

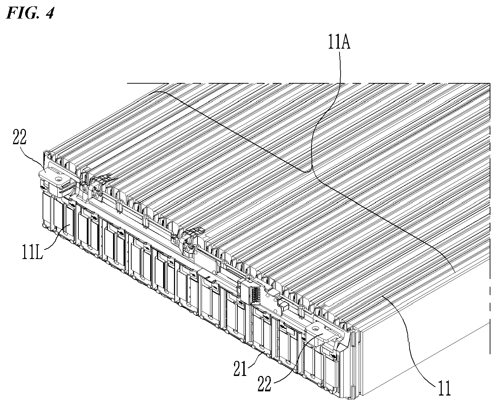

Referring to FIGS. 3 and 4, the battery modules 1200 according to the present embodiment will be described. However, each battery module 1200 described hereinafter is an exemplary structure of a battery module including a plurality of battery cells 11, and the battery module 1200 may be any of various types of battery modules each including a plurality of battery cells.

FIG. 3 is a perspective view illustrating one of the battery modules included in the battery pack of FIG. 2.

FIG. 4 is a perspective view illustrating a portion of the battery module of FIG. 3, from which a module frame and an end plate are removed.

Referring to FIGS. 3 and 4, the battery module 1200 according to the present embodiment may include a battery cell stack 11A in which the plurality of battery cells 11 are stacked. FIG. 4 illustrates the battery cell stack 11A. The battery cell stack 11A may be accommodated in the space defined by a module frame 30 and an end plate 40.

Each battery cell 11 may be a pouch-type battery cell. The pouch-type battery cell may be fabricated by accommodating an electrode assembly in a pouch case made of a laminate sheet including a resin layer and a metal layer, and then, fusing the outer periphery of the pouch case. The battery cell 11 may have a rectangular sheet structure. An electrode lead 11L is connected to the electrode assembly to protrude outwardly from the pouch case, and the electrode leads 11L of the respective battery cells 11 may be electrically connected to each other through a lead busbar 21. Meanwhile, at least one electrode lead 11L may be connected to a terminal busbar 22. As illustrated in FIG. 3, a portion of the terminal busbar 22 may be exposed to the outside of the battery module 1200. The lead busbar 21 and the terminal busbar 22 may include a metal material having an excellent electrical conductivity.

The busbar assembly 100 according to the present embodiment is electrically connected to the terminal busbar 22, to make the HV connection described above. That is, a battery module 1200 may be electrically connected to another battery module 1200, the BDU module 1300, or the BMS module 1400 via the busbar assembly 100 connected to the terminal busbar 22.

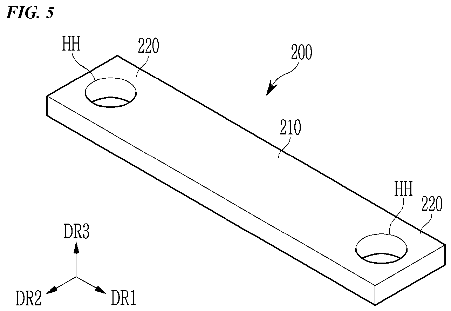

Hereinafter, the busbar assembly according to an embodiment of the present disclosure will be described with reference to FIGS. 5 to 12.

FIG. 5 is a perspective view of a busbar according to an embodiment.

Referring to FIG. 5, a busbar 200 guides the electrical connection in the battery pack 1000 (see, *e.g.,* FIG. 2). The busbar 200 is configured to guide the electrical connection of the battery modules 1200, *i.e.,* the HV connection (see, *e.g.,* FIG. 2), and may be made of a metal material having an excellent electrical conductivity. As an example, the busbar 200 may include a copper (Cu) material. A body 210 may have a rod shape that extends in one direction. For example, in FIG. 2, the busbar 200 is illustrated as having a rod shape that extends in the first direction DR1.

The busbar 200 of an embodiment includes the body 210 and end portions 220. The body 210 may correspond to the central portion of the busbar 200. The end portions 220 extend from both ends of the body 210. For example, the end portions 220 may extend from both ends of the body 210 in the first direction DR1 and the direction opposite to the first direction DR1, respectively. For the convenience of description, the busbar 200 is described as including the body 210 and the end portions 220, but the body 210 and the end portions 220 are formed in an integrated shape.

The through holes HH are formed at the end portions 220, respectively. Fastening members may be inserted into the through holes HH to connect the busbar 200 to an external electrical device. For example, bolts may be inserted into the through holes HH of the end portions 220 to connect the busbar 200 and the terminal busbars 22 (see, *e.g.,* FIG. 3) of the battery modules 1200 (see, *e.g.,* FIG. 3).

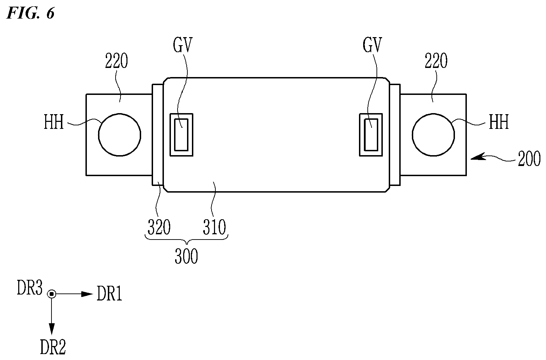

FIG. 6 is a perspective view of a busbar provided thereon with an insulating layer according to an embodiment.

Referring to FIG. 6, an insulating layer 300 is provided to enclose the body 210 of the busbar 200 (see, *e.g.,* FIG. 5). That this, the insulating layer 300 is provided to insulate the body 210 (see, *e.g.,* FIG. 5). In this case, at least a portion of each end portion 220 may be exposed from the insulating layer 300 to be electrically connected to the terminal busbar 22 (see, *e.g.,* FIG. 3) of the battery module 1200 (see, *e.g.,* FIG. 3).

The insulating layer 300 may include a fire-resistant silicone. For example, the insulating layer 300 may be formed by molding the fire-resistant silicone on the outer peripheral surface of the body 210 of the busbar 200 (see, *e.g.,* FIG. 5). Unlike a typical silicone material that burns when exposed to a flame or at a high temperature, the fire-resistant silicone may become ceramics at a high temperature. Since the fire-resistant silicone may become ceramics without burning when exposed to a flame, it may maintain the insulation performance against the busbar 200. For example, the fire-resistant silicone may become ceramics at a temperature of about 500°C or more and 1,700 °C or less. However, the temperature range in which the fire-resistant silicone may become ceramics is not limited thereto.

The fire-resistant silicone may include a silicone polymer and silica. For example, an applicable silicone polymer may be a polysiloxane-based compound having a vinyl group as a functional group, and may serve as a base made of a fire-resistant silicone material. For example, an applicable silica is a reinforcing filler contained in the silicone polymer, and may be, for example, a fumed silica. While using a silicon metal as a main raw material, a high-purity silicon chloride (SiCl₄) compound may be prepared through a reaction with hydrochloric acid and a purification. The prepared compound may be reacted with hydrogen and oxygen in a high-temperature flame to produce the fumed silica. Further, the fire-resistant silicone may include platinum (Pt) as a catalyst.

When the fire-resistant silicone is exposed to a flame or high-temperature heat, the silicon polymer decomposes, and simultaneously, the silica (SiO₂) is cross-linked, so that a ceramic material is formed. In an embodiment, the insulating layer 300 including the fire-resistant silicone may become ceramics without burning or melting away even when exposed to a flame or a high-temperature environment, so that the electrical insulation performance may be maintained.

Therefore, the insulating layer 300 may insulate the body 210 (see, *e.g.,* FIG. 5) of the busbar 200 even in a flame or at a high temperature, and therefore, prevent the busbar 200 from coming into contact with other electrical components or conductive members, which causes a short.

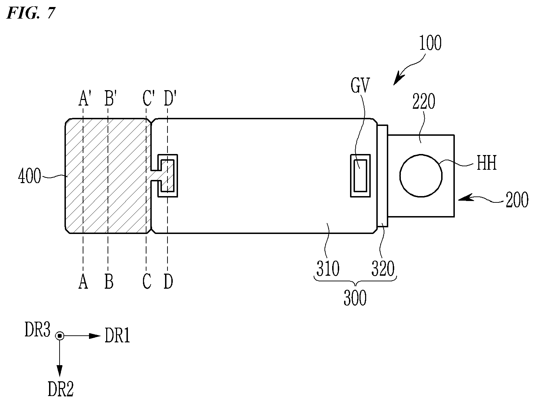

The caps 400 (see, *e.g.,* FIG. 7) to be described later are connected to the insulating layer 300. In order to prevent the busbar 200 from being exposed at the portion where the insulating layer 300 and each cap 400 (see, *e.g.,* FIG. 7) are connected, the insulating layer 300 may extend to cover a portion of the end portion 220. At this time, each end of the insulating layer 300 extends to a predetermined length in a range that does not shield the through hole HH of the end portion 220.

The insulating layer 300 may include a first portion 310 that encloses the body 210 of the busbar 200 (see, *e.g.,* FIG. 5) and a second portions 320 that each enclose a portion of the end portion 200.

The first portion 310 may enclose the outer peripheral surface of the body 210 of the busbar 200. The second portions 320 are portions that extend from both ends of the first portion 310, and are covered by the caps 400 to be described later. Each second portion 320 may enclose the upper surface and the side surfaces of the end portion 220 of the busbar 200. That is, the second portion 320 may not be disposed on the lower surface of the end portion 220. This is because the cap 400 to be described later encloses mainly the upper and side surfaces of the end portion 220 when being fitted into the end portion 220 in a plan view.

The second portions 320 extend in opposite directions from both ends of the first portion 310. Specifically, one of the second portions 320 extends in the first direction DR1 from one end of the first portion 310, and the other extends in the opposite direction to the first direction DR1 from the other end of the first portion 310. Each second portion 320 extends from the first portion 310 to the extent that the second portion 320 does not shield the through hole HH of the end portion 220.

The insulating layer 300 may secure the insulation distance by including the second portions 320. Further, the caps 400 (see, *e.g.,* FIG. 7) to be described later enclose the second portions 320, to prevent the busbar 200 from being exposed to an outside.

A groove GV is formed in the insulating layer 300 to have a recessed shape. In an embodiment, the groove GV may be formed in the upper surface of the first portion 310 to be adjacent to the second portion 320. Two grooves GV may be formed at both ends of the first portion 310, respectively. Since the groove GV has the recessed shape, an external fastener may be inserted into the groove GV. Specifically, the cap 400 (see, *e.g.,* FIG. 7) to be described later may include the fastener that is inserted into the groove GV.

FIG. 7 is a plan view of a busbar assembly according to an embodiment.

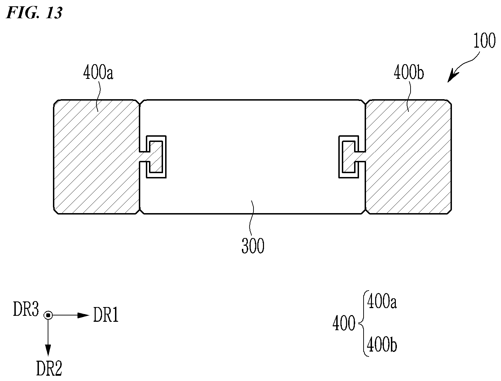

For the convenience of description, FIGS. 7 to 12 illustrate a state where the cap 400 is provided on one end portion 220 of the busbar 200 (see, *e.g.,* FIG. 6), and is not provided on the other end portion 220. However, this is merely for facilitating the description, and the busbar assembly 100 of the present disclosure may include the caps 400 provided on both the end portions 220 of the busbar 200, respectively, as illustrated in FIG. 13.

Referring to FIG. 7, the busbar assembly 100 of an embodiment includes the busbar 200, the insulating layer 300, and the cap 400. The insulating layer 300 insulates the body 210 of the busbar 200, and the cap 400 insulates the end portion 220 of the busbar 200. The insulating layer 300 and the cap 400 are connected to each other, and specifically, the cap 400 is coupled to the insulating layer 300 while enclosing the second portion 320 of the insulating layer 300. Thus, the busbar 200 may be prevented from being exposed between the cap 400 and the insulating layer 300, and the insulation distance may be secured.

Further, a portion of the cap 400 is inserted into the groove GV of the insulating layer 300, so that the cap 400 may be stably fixed to the insulating layer 300 without wobbling from side to side.

The cap 400 may include a fire-resistant plastic. Accordingly, the cap 400 may be harder and less elastic than the insulating layer 300 that includes the fire-resistant silicone.

In the present disclosure, the insulating layer 300 has the higher elasticity than the cap 400, so that the cap 400 may be fixed to the insulating layer 300 without needing a separate tape for fixing the cap 400. When the cap 400 is tightly fitted into the groove GV of the insulating layer 300, the cap 400 may be inserted into the groove GV while pressing the insulating layer 300 with the relatively high elasticity, and due to the elasticity of the insulating layer 300, the cap 400 may be fixed inside the groove GV. Accordingly, the conventional tape AL (see, *e.g.,* FIG. 1) for fixing the cap 400 to the insulating layer 300 may be omitted.

Further, the cap 400 may include the fire-resistant plastic, to exhibit the excellent fire resistance performance. When exposed to a flame, the fire-resistant plastic may serve to block the flame without suffering from holes or drips for a predetermined period of time. Specifically, when a flame occurs, the fire-resistant plastic may form a carbonized layer to protect the internal structure. The fire-resistant plastic may include at least one of a polyphenylene oxide (PPO)-based material, a polyamide (PA)-based material, and a polybutylene terephthalate (PBT)-based material.

Thus, the busbar assembly 100 of an embodiment may provide the enhanced insulation performance and fire resistance while having the simpler structure than that of the conventional busbar assembly.

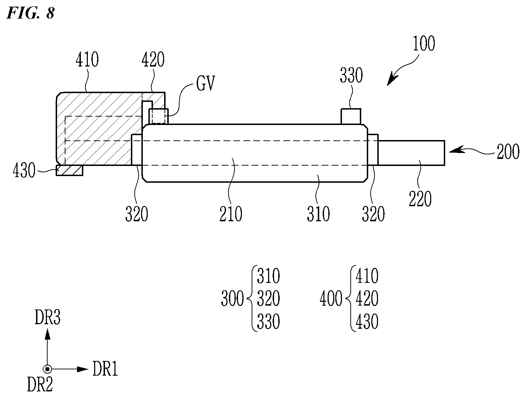

The detailed structure of the insulating layer 300 and the cap 400 will be described with reference to FIG. 8.

FIG. 8 is a side view of a busbar assembly according to an embodiment.

Referring to FIG. 8, the cap 400 according to an embodiment may include a main body 410 and a fastener 420 extended from the main body 410. The fastener 420 extends from the position corresponding to the end portion 220 of the busbar 200 toward the body 210, and is inserted into the groove GV formed in the insulating layer 300. At this time, the groove GV is formed inside a protrusion 330 extending upwardly from the upper surface of the first portion 310 of the insulating layer 300, which may secure a sufficient depth. When the groove GV is formed directly in the upper surface of the first portion 310 of the insulating layer 300 without the protrusion 330, the groove GV may not have sufficient depth due to the body 210 disposed inside the insulating layer 300.

As described above, when the fastener 420 of the cap 400 is tightly fitted into the groove GV, the fastener 420 may be inserted into the groove GV and fixed therein due to the high elasticity of the groove GV. As a result, the cap 400 may be stably connected to the insulating layer 300 without wobbling from side to side.

The cap 400 may further include fixing units 430 that extend downwardly from the main body 410. Each fixing unit 430 may cover at least a portion of the lower surface of the busbar 200. Specifically, the fixing unit 430 may cover at least a portion of the lower surface of the end portion 220 of the busbar 200. By including the fixing units 430, the cap 400 may be stably fixed to the busbar 200 without wobbling up and down.

Meanwhile, the insulating layer 300 may be formed by injection-molding of the first portion 310, the second portions 320, and the protrusions 330 in an integrated shape.

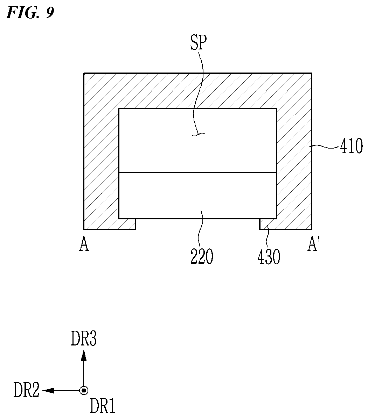

Hereinafter, the busbar assembly 100 of an embodiment will be described with reference to the cross-sectional views of FIGS. 9 to 12. FIGS. 9 to 12 are cross-sectional views of a busbar assembly according to an embodiment, respectively.

FIG. 9 is a cross-sectional view corresponding to the cut-off line A-A' illustrated in FIG. 7.

Referring to FIGS. 7 and 9, the main body 410 of the cap 400 insulates the end portion 220 of the busbar 200 by enclosing the upper and side surfaces of the end portion 220 of the busbar 200. In this case, a space SP is present between the main body 410 and the end portion 220. Although not illustrated, the space SP is intended to accommodate an external fastening member (*e.g.,* a bolt) that is inserted through the through hole HH (see, *e.g.,* FIG. 7).

The fixing units 430 that extend downwardly from the main body 410 cover the lower surface of the end portion 220 of the busbar 200. When viewed from the first direction DR1, the fixing units 430 may be formed at one and the opposite ends of the end portion 220. By providing the fixing units 430, the cap 400 may be fixed to the busbar 200 without wobbling up and down.

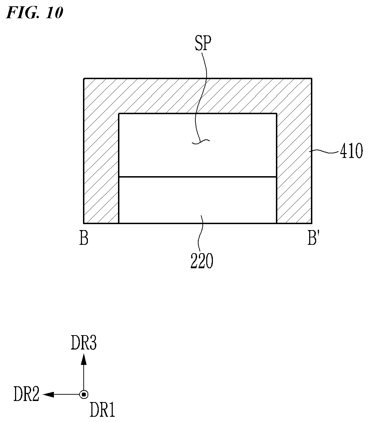

FIG. 10 is a cross-sectional view corresponding to the cut-off line B-B' illustrated in FIG. 7.

Referring to FIGS. 7 and 10, the fixing units 430 are not disposed on the lower surface of the end portion 220 that corresponds to the cut-off line B-B'. That is, only the main body 410 encloses the upper and side surfaces of the end portion 220 to insulate the end portion 220. In this case, the space SP is also present between the main body 410 and the end portion 220. Although not illustrated, the space SP is intended to accommodate an external fastening member (e.g., a bolt) that is inserted through the through hole HH (see, *e.g.,* FIG. 7).

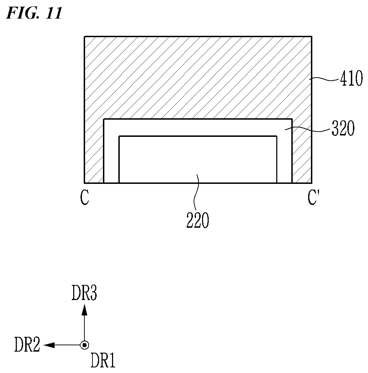

FIG. 11 is a cross-sectional view corresponding to the cut-off line C-C' illustrated in FIG. 7.

Referring to FIGS. 7 and 11, the second portion 320 of the insulating layer 300 is disposed on the end portion 220 of the busbar 200, and the main body 410 of the cap 400 is disposed on the second portion 320.

The second portion 320 insulates the end portion 220 by enclosing the side and upper surfaces of the end portion 220. The main body 410 may enclose the second portion 320 without forming a separate space. The insulating layer 300 may secure the insulation distance by including the second portion 320 that is superimposed on the end portion 220.

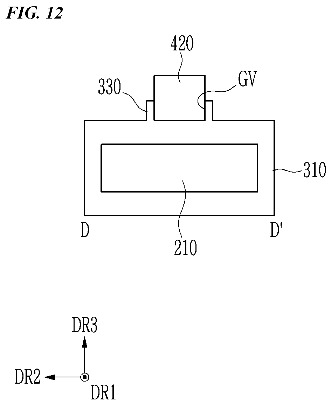

FIG. 12 is a cross-sectional view corresponding to the cut-off line D-D' illustrated in FIG. 7.

Referring to FIGS. 7 and 12, the first portion 310 of the insulating layer 300 encloses the outer peripheral surface of the body 210 of the busbar 200. The first portion 310 may insulate all of the upper surface, the side surfaces, and the lower surface of the body 210. The protrusion 330 with the groove GV formed therein is disposed on the first portion 310. The fastener 420 of the cap 400 may be fastened into the groove GV.

FIG. 13 is a plan view of a busbar assembly according to an embodiment.

Referring to FIG. 13, the busbar assembly 100 includes the busbar 200, the insulating layer 300, and the caps 400. The caps 400 may include two caps 400a and 400b provided at both ends of the busbar assembly 100. The two caps 400a and 400b may have a symmetrical shape relative to the center of the busbar assembly 100.

Referring to FIGS. 7 to 13, in the busbar assembly 100 of an embodiment, the fastener 420 of the cap 400 is fitted into the groove GV of the insulating layer 300 that has a relatively high elasticity, so that the fastener 420 may be stably fixed to the insulating layer 300 without wobbling from side to side. Further, the fixing units 430 of the cap 400 are disposed on the lower surface of the end portion 220 of the busbar 200, so that the cap 400 may be stably fixed to the busbar 200 without wobbling up and down.

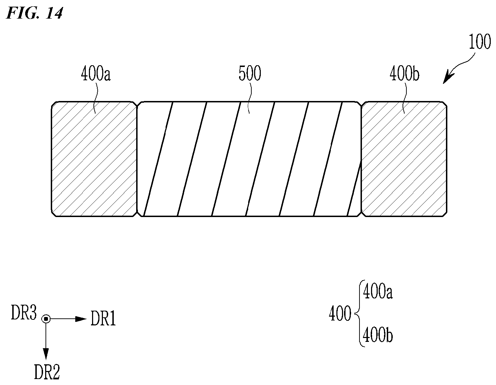

FIG. 14 is a plan view of a busbar assembly according to an embodiment.

Referring to FIG. 14, the busbar assembly 100 includes the busbar 200, the insulating layer 300, and the caps 400, and may further include a fiberglass layer 500. The fiberglass layer 500 may be provided to enclose the insulating layer 300 (see, *e.g.,* FIG. 13). The fiberglass layer 500 may be provided to physically protect the internal structure. For example, the fiberglass layer 500 may protect the insulating layer 300 (see, *e.g.,* FIG. 13) not to be directly exposed to a flame occurring outside.

Further, the fiberglass layer 500 may impart a structural rigidity to the busbar assembly 100 to improve the insulation performance. When the insulating layer 300 (see, *e.g.,* FIG. 13) becomes ceramics in a flame or high-temperature environment, the insulating layer 300 (see, *e.g.,* FIG. 13) may maintain the electrical insulation performance, but may fracture due to an external force as the rigidity of the insulating layer 300 decreases. Since the fiberglass layer 500 is provided to enclose the insulating layer 300 (see, *e.g.,* FIG. 13), the insulating layer 300 (see, *e.g.,* FIG. 13) is prevented from being fractured due to an external force.

In an embodiment, the fiberglass layer 500 may be provided in the form of a fiberglass tape, to be wrapped around the insulating layer 300 (see, *e.g.,* FIG. 13) multiple times.

Meanwhile, the busbar assembly 100 of the present disclosure is not limited to the embodiments described above.

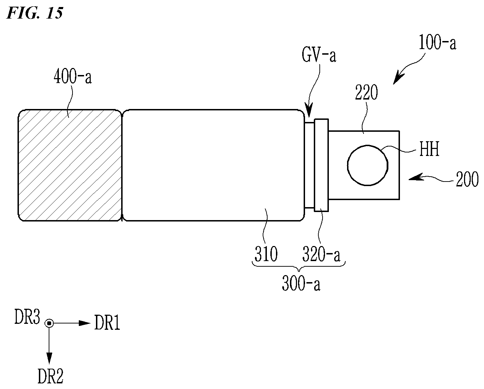

FIG. 15 is a plan view of a busbar assembly according to an embodiment.

Referring to FIG. 15, a busbar assembly 100-a of an embodiment includes the busbar 200, an insulating layer 300-a, and caps 400-a. For the convenience of description, FIG. 15 illustrates a state where the cap 400-a is provided on one end portion 220 of the busbar 200, and is not provided on the other end portion 220 to expose the other end portion 220. However, this is merely for facilitating the description, and the busbar assembly 100-a of the present disclosure may include the caps 400-a provided on both end portions 220, respectively.

The insulating layer 300-a may be provided on the outer peripheral surface of the busbar 200.

The insulating layer 300-a may include the first portion 310 that encloses the body 210 of the busbar 200 (see, *e.g.,* FIG. 5) and a second portion 320-a that encloses a portion of the end portion 220. The insulating layer 300-a may be formed by injection-molding of the first portion 310 and the second portion 320-a in an integrated shape.

A groove GV-a is formed in the insulating layer 300-a to have a recessed shape. In an embodiment, the groove GV-a may be formed along the circumference of the second portion 320-a to be adjacent to the first portion 310. When the cap 400-a is mounted on the end portion 220, the cap 400-a may cover the second portion 320-a, and simultaneously, at least a portion of the cap 400-a may be inserted into the groove GV-a of the second portion 320-a. As a result, the cap 400-a may be prevented from coming off in the direction toward the end portion 220. Two grooves GV-a may be formed at the two second portions 320-a, respectively.

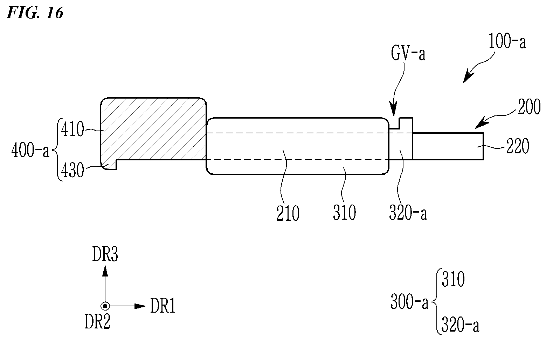

FIG. 16 is a side view of a busbar assembly according to an embodiment.

Referring to FIG. 16, the first portion 310 may enclose the outer peripheral surface of the body 210 of the busbar 200. The second portions 320-a are portion that extend from both ends of the first portion 310 and are covered by the caps 400-a. Each second portion 320-a may enclose the upper and side surfaces of the end portion 220 of the busbar 200. That is, the second portion 320-a may not be disposed on the lower surface of the end portion 220. This is because the cap 400-a encloses mainly the upper and side surfaces of the end portion 220 when being fitted into the end portion 220 in a plan view.

In an embodiment, the cap 400-a may include the main body 410 and the fixing unit 430 extending downwardly from the main body 410. Compared to the cap 400 described above with reference to FIG. 7, the cap 400-a of the present embodiment does not include the fastener 420. The cap 400-a is inserted into the groove GV-a formed along the circumference of the second portion 320-a, so that the cap 400-a may be stably connected to the insulating layer 300-a even though the cap 400-a does not include the fastener 420 described above.

The fixing unit 430 may extend downwardly from the main body 410 to cover at least a portion of the lower surface of the end portion 220 of the busbar 200. By including the fixing unit 430, the cap 400-a may be stably fixed to the busbar 200 without wobbling up and down.

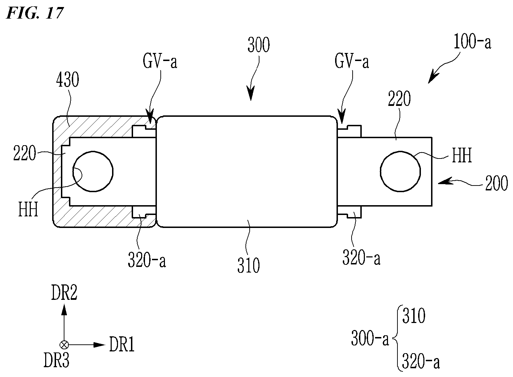

FIG. 17 is a rear view of a busbar assembly according to an embodiment.

Referring to FIGS. 16 and 17, the fixing unit 430 of the cap 400-a may be provided along at least a portion of the circumference of the end portion 220. Even though the cap 400-a does not include the fastener 420 (see, *e.g.,* FIG. 7), the sufficient fastening force may be secured because the fixing unit 430 is disposed along the circumference of the busbar 200.

In the busbar assembly of the present disclosure, the relatively robust cap is inserted into the insulating layer that has the relatively high elasticity and elongation, so that the cap may be coupled to the insulating layer by the elasticity of the insulating layer. As a result, the tape used in the art to fix the cap may be omitted, and the busbar assembly with the simpler structure and the improved insulation performance and fire resistance may be provided.

In the embodiments above, expressions indicating directions such as "front," "rear," "left," "right," "up," and "down" have been used. However, these expressions are used only to facilitate the description, and may vary, for example, depending on the location of a target object or an observer.

One or more battery modules according to an embodiment of the present disclosure described above may be mounted together with various control and protection systems such as a battery management system (BMS), a battery disconnect unit (BDU), and a cooling system, to form a battery pack.

The battery modules or the battery pack may be applied to various devices, which include, for example, transportation vehicles such as electric bicycles, electric vehicles, and hybrids, and energy storage systems (ESS). However, without being limited thereto, the battery modules or the battery pack may be applied to various devices using secondary batteries.

While the embodiments of the present disclosure have been described in detail, the technical scope of the present disclosure is not limited to the embodiments, and also includes various modifications and improvements made by one of ordinary skill in the art using the concepts defined in the claims attached therewith.

### [Description of Reference Numerals]

100. 100-a: busbar assembly
200: busbar
210: body
220: end portion
300, 300-a: insulation layer
310: first portion
320, 320-a: second portion
330: third portion
400, 400-a: cap
410: main body
420: fastener
430: fixing unit
500: fiberglass layer
1000: battery pack
1100: pack frame
1200: battery module
1300: BDU module
1400: BMS module

## Claims

1. A busbar assembly comprising:
a busbar including a body and end portions that extend from both ends of the body and have through holes defined therein;
an insulating layer that encloses the body and has a groove formed in a recessed shape; and
a cap that is inserted into the groove and encloses the end portions,
wherein the insulating layer has a higher elasticity than the cap.

2. The busbar assembly according to claim 1, wherein the insulating layer includes a first portion that encloses the body, and a second portion that extends from the first portion to enclose a portion of the end portions, the second portion being covered by the cap.

3. The busbar assembly according to claim 2, wherein two grooves are formed in an upper surface of the first portion, and each of the two grooves is formed adjacent to the second portion.

4. The busbar assembly according to claim 3, wherein the cap includes a fastener formed such that the portion of the cap protrudes in a direction toward the body to be inserted into the groove.

5. The busbar assembly according to claim 2, wherein the groove is formed along a circumference of the second portion, and the groove is adjacent to the first portion.

6. The busbar assembly according to claim 5, wherein at least the portion of the cap is inserted into the groove while the cap covers the second portion.

7. The busbar assembly according to claim 2, wherein the first portion encloses an outer peripheral surface of the busbar.

8. The busbar assembly according to claim 2, wherein the second portion encloses an upper surface and side surfaces of the busbar.

9. The busbar assembly according to claim 1, wherein the cap covers at least a portion of a lower surface of the busbar.

10. The busbar assembly according to claim 1, further comprising
a fiberglass layer provided to be wrapped around the insulating layer.

11. The busbar assembly according to claim 1, wherein the insulating layer comprises silicone that becomes ceramics at a high temperature.

12. The busbar assembly according to claim 1, wherein the cap comprises a fire-resistant plastic.

13. A battery pack comprising:
at least one busbar assembly according to claim 1;
a plurality of battery modules;
a battery disconnect unit (BDU) module that controls an electrical connection of the plurality of battery modules; and
a battery management system (BMS) module that monitors and controls operations of the plurality of battery modules,
wherein the at least one busbar assembly electrically connects at least one of: between the plurality of battery modules, between the battery module and the BDU module, between the battery module and the BMS module, or between the BDU module and the BMS module.
